# EUROPEAN PATENT SPECIFICATION

(11) **EP 2 297 625 B1**
(45) Date of publication and mention of the grant of the patent: **07.11.2012**
(21) Application number: 09754111.4
(22) Date of filing: 29.05.2009
(51) Int. Cl.: E03F 5/22, E03F 1/00, G05D 9/12

(54) **SUMP MONITORING METHOD AND APPARATUS**
SUMPFÜBERWACHUNGSVERFAHREN UND -VORRICHTUNG
PROCÉDÉ ET APPAREIL DE SURVEILLANCE DE PUISARD

(30) Priority: 30.05.2008 GB 0809866
(43) Date of publication of application: 23.03.2011
(73) Proprietor: Pulsar Process Measurement Limited, Worcestershire WR14 1JJ (GB)
(72) Inventor: TRAN, Sang, Oldbury West Midlands B68 0EZ (GB); DALBY, Adrian, Glenfield Leicester LE3 8HG (GB)
(74) Representative: Gosnall, Toby
(86) International application number: PCT/GB2009/001347
(87) International publication number: WO 2009/144466

(56) References cited:
- EP-A- 1 217 218
- JP-A- 2003 239 372
- US-A- 5 190 442

## Description

This invention relates to a method of monitoring the operation of one or more sumps in order to predict an overflow condition and to apparatus for carrying out such a method. This invention also relates to a method and apparatus for monitoring the condition of a pump and to a method of prioritising sump maintenance visits. Although the present invention will be described herein with particular reference to the operation of electrically controlled pumps in a pumping station it is not to be construed as being limited thereto.

A typical pumping station comprises a plurality of wells or sumps, each said well or sump having an inlet to admit liquid thereinto and an outlet to remove liquid therefrom. Each outlet is associated with one or more pumps which, in use, transfer the liquid from the well or sump to the outlet for further processing.

Sumps are commonly used in pumping stations for pumping sewage to sewage treatment works. Inlet and outlet lines carry the sewage to and from the pumping station. Each channel may be closed or open and may be arranged to carry flood or rain water at peak flow times in order to prevent or reduce flooding of land and property.

EP 1217218 shows a prior art method of controlling pumping from a sump.

According to a first aspect of the invention there is provided a method of monitoring one or more sumps according to claim 1.

Conveniently, the prediction as to whether the sump will overflow is either performed at a location remote from the sump or is transmitted to a location remote from the pump. Such an arrangement is convenient as it allows remote monitoring of the or each sump.

Monitoring of the liquid level and/or of the pump condition or both may be performed substantially continuously or may be performed from time to time, and perhaps periodically.

The pump condition data and the liquid level data may be used to determine the pump operating condition. If it is determined that the pump is not operating efficiently an indication may be made at the remote location that the pump may be faulty and requires attention.

Processing means may be provided at or near the sump or at the remote location or both. The processing means may process information from the liquid level monitoring means each time a measurement is made thereby. The processing means may calculate a rate of change of liquid level and use the rate of change to predict whether the sump may overflow within a predetermined future period. The future period may be one hour but other periods may be used and the predetermined period may be adjusted.

An alarm signal may be transmitted or generated if an overflow is predicted within the predetermined period. Alternatively processing means at the remote location may generate an alarm signal.

Preferably the processing means combines information from the liquid level monitoring means and the pump condition monitoring means. A high priority alarm signal may be generated at the remote location if an overflow is predicted within the predetermined future period. Engineers may be directed to the sump in response to the high priority alarm signal.

Accordingly an indication is provided if the pump is at fault or if a flood is predicted or if an overflow is predicted and the pump is faulty.

This is particularly advantageous where water companies are subject to fines if flooding occurs as a result of a fault with the or each pumps in a sump.

The liquid level monitoring means may be conventional. Preferably the liquid level is monitored every second. Data from the liquid level monitoring means may be output to the transmission means and transmitted to a processing means at the remote location or may be output to a local processing means.

The liquid level monitoring means or the processing means may be provided with a maximum rate of flow into the sump. Further, the liquid level monitoring means or the processing means may be provided with a maximum rate of flow out of the sump. A signal may be transmitted from the liquid level monitoring means in event of the rate of change of liquid level in the sump being greater than the predetermined maximum rate of change.

A rapid outflow resulting in a rapid decrease in liquid level may indicate a burst in an outflow pipe and an appropriate signal may be generated. An increase in liquid level in the absence of flow into the sump may indicate a blockage in the outflow pipe and an appropriate signal may be generated.

The pump monitoring means monitors at least one operating condition of the pump. More than one operating condition may be monitored. Data relating to the pump condition is transmitted to the processing means. The processing means may be local or remote or both.

The operating condition monitored may be selected from one or more of the following: temperature of the pump, current drawn by the pump, or the like.

The pump may be provided with a restart mechanism since in many cases the pump does not operate continuously but may allow the sump to fill before pumping the liquid out. Such a mode of operation may reduce total energy consumed and so can reduce energy costs to the pump operator. The restart mechanism may be automatically initiated at a certain liquid level. The pump monitoring means may generate a pump failure signal if the restart mechanism fails to restart the pump on a predetermined number of consecutive occasions. Typically a pump failure signal may be generated if the pump fails to start on three consecutive occasions.

Alternatively, or in addition, the pump monitoring means may monitor a current load to the pump. If this increases it may indicate that the pump load is increasing. Combined with for example an increase in the liquid level this might indicate a blockage in the outlet and an appropriate signal may be transmitted to the remote location.

A thermal sensor provided in thermal connection with the pump may similarly provide data indicative of a load on the pump.

A flow switch may be provided on the pump operable to measure a flow rate of liquid through the pump. A reduced flow rate through the pump may indicate a blockage within the pump especially when associated with rising liquid levels within the sump.

Means of measuring the efficiency of the pump may also be provided. This may be based for example on a volume of liquid pumped in relation to the pumping time (ie the time for which the pump is operated). For example, if the volume of liquid pumped in a predetermined time does not align with the pump characteristics then it might be inferred that the something is not operating as it should; the pump might have a problem, there might be a blockage on the outlet, etc.

Such early warning indications may be transmitted to the remote location.

It is envisaged that the remote location may have means arranged to rank the indicators and signals in terms of those with immediate problems and those needing inspection combined with those sumps in which there is an imminent risk of flooding. The above aspect may provide a method of prioritising maintenance of a series of pumps provided at remote locations whereby each pump is located in a sump;
monitoring the liquid level in the or each sump using a level monitoring means and outputting liquid level data;
monitoring at least one operating condition of the or each pump and outputting pump condition data;
processing the liquid level and the pump condition data, using processing circuitry, and prioritising pump maintenance visits according to the processing.

Processing means may be provided at the pump location arranged to process data from the liquid level monitoring means and pump condition means. The processing means may compare the data to reference data and may generate an appropriate indicator signal if input data does not fall within predetermined reference data ranges. Alternatively, or additionally, the processing means may be provided remote of the pump location.

The indicator signal may be transmitted from a local processing means at the pump location to the remote location. Alternatively processing means may be provided at the remote location and liquid level data and/or pump condition data may be transmitted to the processing means at the remote location.

The liquid level may be monitored substantially continuously or from time to time, and perhaps periodically. Preferably liquid level and pump condition are monitored at predetermined intervals. Suitable intervals may be every 1 sec, 5 sec, 10 sec, 30 sec, 1 min, 5 min or any other suitable interval. Preferably at least one of the liquid level monitoring means and the processing means is arranged to calculate a rate of change of liquid level. Advantageously the rate of change of liquid level may be used to predict whether the sump might over flow within a predetermined period. The predetermined period is advantageously one hour but may be different.

According to a second aspect of the invention there is provided apparatus according to claim 14.

A transmission means may be provided and arranged to transmit data from the apparatus to a remote location.

Preferably the output is arranged to indicate if any one or more of the pump conditions monitored deviate from a normal predetermined range for that condition. In a most preferred embodiment the output at the remote location indicates if the pump is not operating within a normal set of conditions and also if there is a risk of overflow of the sump. It is advantageous if the output indicates whether the sump may overflow within a predetermined period or the output may provide an estimate of an interval before an overflow condition of the sump is reached.

The invention will now be further described by way of example only with reference to the accompanying drawings in which:
**Figure 1** is a schematic arrangement of a number of remotely located sumps and a remote location;
**Figure 2** is a schematic illustration of a typical sump, and

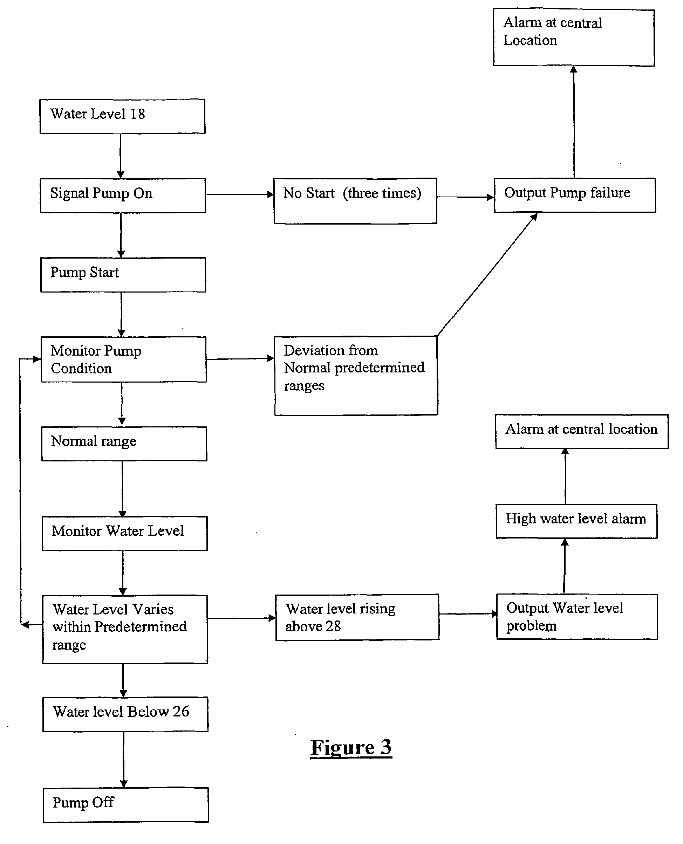

**Figure 3** is a schematic indication of steps taken in processing information.

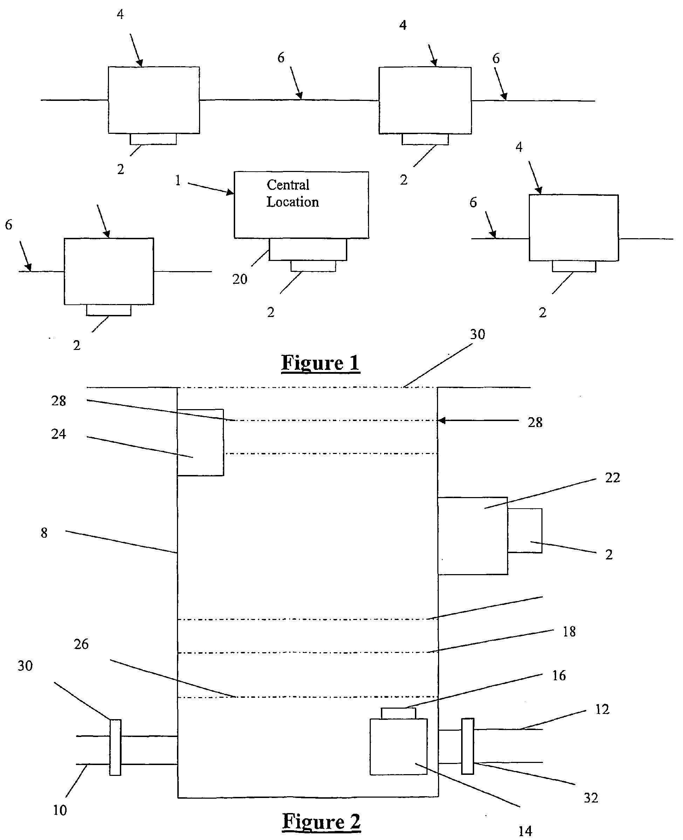

As is illustrated schematically in Figure 1 a typical installation comprises a remote monitoring location 1 connected by transmission means 2 to each of a number of sumps 4. Each sump is located in a liquid flow line 6. The or each sump may be in the same liquid flow line 6 or may be located in different liquid flow lines.

Typically the liquid flow lines are transmitting sewage waste water from domestic and commercial premises to a sewage treatment unit. Liquid flow lines are arranged to flow by gravity wherever possible but it is often necessary to provide one or more pumping stations in the line. Each pumping station may have one or more sumps, from which liquid is pumped along the liquid flow line 6. The invention may equally be applied to other pumps and flow lines and is not limited to the pumping of sewage.

Each sump comprises a reservoir 8 having an inlet 10 and an outlet 12. A pump 14 is provided in the sump and is arranged to pump liquid from the sump into the outlet. More than one pump may be provided in some sumps.

A pump condition monitoring means 16 is provided connected to the pump and to the transmission means 2.

The pump condition monitoring means is arranged to monitor at least one condition indicative of pump condition. The condition may be one or more of an operating temperature of the pump, a flow indicator, an efficiency of the pump, a current load drawn by the pump, but would typically be the current load and/or operating temperature. These conditions may indicate that the pump is not operating effectively even if it has not failed. The conditions may deviate from a normal predetermined range of values if a problem is occurring and maintenance at this stage may prevent failure of the pump.

The pump is also provided with a restart mechanism (not shown) whereby the pump is automatically started when a water level in the sump reaches a first level 18. The restart mechanism is arranged to start the pump. In an event where the pump fails to start the mechanism will retry starting after an interval. In a preferred embodiment if the pump fails to start after three consecutive attempts a signal is output. The signal may be output to the transmission means 2 and transmitted to a remote processing unit 20 at the remote location 1.

Alternatively a local processing unit 22 may be provided at each sump 4 and an output of a processing means 22 may be transmitted by suitable mans such as a radio transmitter, phone lines, cable, cellular phones, other suitable equipment which may yet to be developed, to the remote location. Remote processing means 20 may be provided at the remote processing unit in addition to the local processing unit 22. At the remote location a pump condition display will indicate a pump failure indication or signal in respect of the pump which has not started. If the pump has not failed but the pump condition monitoring means indicates that the pump is not operating efficiently and within a range of predetermined normal parameters an appropriate warning signal is output at the remote location.

The sump is also provided with a liquid level monitoring means 24. The location is schematically indicated in Figure 2 but the liquid level monitoring means may be located elsewhere in the sump depending on the type of liquid level monitoring means utilised. The water level monitoring means may be conventional and well known such as ultrasonic level sensors. The liquid level is measured from time to time and perhaps periodically. The interval may be 1 sec, 2 sec, 3 sec, 4 sec, 5 sec, 30 sec, 1 min, 5 min or any other interval as desired. Substantially continuous monitoring may be used.

A minimum liquid level 26 occurs when pumping is complete. When the liquid level reaches a first level 18 a signal is sent to the or each pump in the sump to begin pumping. The liquid level should begin to drop if the pump output is as great as the liquid flow into the sump.

If the liquid inflow is greater than the pump output then the liquid level continues to rise. When the liquid level reaches a high point 28 an alarm output may be output to the transmitting means. In a preferred embodiment the liquid level monitoring means or one of the local or remote processing means is arranged to calculate a predicted rate of liquid level increase and generate an alarm signal at the remote location if an overflow condition 30 may be reached within a predetermined period, typically an hour.

The alarm signal generated at the remote location may indicate that an overflow condition is imminent and also whether the pump is working normally, is operating outside some predetermined parameters or whether the pump has failed.

The remote processing means is arranged to receive data inputs from each sump and to output appropriate condition signals. The remote processing means is also arranged to prioritise proposed maintenance visits to each sump.

Liquid flow lines to sewage treatment units typically are arranged to transport sewage water only and do not in normal conditions receive rain water. However, in high precipitation conditions rainwater may enter sewage flow lines causing unusually high flow rates and possible cross contamination. The high flow rates into the sump may lead to an overflow condition.

If the overflow condition results from the high flow rate into the sump and the pump can be shown to be operating normally this overflow is attributed to as inevitable and a company responsible for the liquid flow line is not held to be at fault. However, if the pump is shown to be not working or to be at fault then the company is held responsible for appropriate maintenance of the pumps and may be fined for an overflow occurring as a result of inadequate maintenance.

Consequently it is desirable to prioritise maintenance visits to sumps. Those close to overflow and in which the pump has failed have highest priority. Sumps which may overflow but in which the pump is operating normally have low priority since no penalty is incurred in respect of these sumps.

Additional advantages may accrue from the remote monitoring of pump conditions and sump liquid level. Flow meters 30 and 32 may be provided in the inlet and outlets respectively. Information from one or both of these may be output to the transmission means or local processing means. If the liquid level rises and the pump is operating normally in a period of normal precipitation this scenario may indicate a blockage in the outflow. This may be confirmed by inlet flow meter results being within a predetermined normal range in combination with a rise in liquid level. Unusual condition results from a pump in combination with a low outlet flow meter reading may be associated with a blockage in the pump. A leak in the outlet line may be indicated by unusually high rate of change of level.

Outputs at the remote location may be visual, audible, or printed. It will be understood that processing of data for an individual sump including diagnosis of faults may occur at the local processing means. Alternatively raw data may be transmitted to the remote location and processed there. Prioritisation of maintenance visits is carried out at the remote location where information from all the sumps is received.

## Claims

1. A method of monitoring one or more sumps the method comprising:
pumping, using at least one pump (14), liquid from the or each sump (4);
monitoring a liquid level (26,28) in the or each sump (4) using a level monitor and outputting liquid level data, **characterised in that** the method also comprises
monitoring at least one operating condition of the or each pump (14) and outputting pump condition data wherein the operating condition is selected from the group comprising temperature of the pump, current drawn by the pump, restart condition of the pump, flow rate through the pump line, efficiency of the pump and
processing the liquid level (26,28) and pump condition data, using processing circuitry (20), to predict whether the sump will overflow within a predetermined future period and outputting the prediction.

2. . A method of monitoring one or more sumps according to claim 1, in which the prediction as to whether the sump will overflow is either performed at a location remote from the sump or is transmitted to a location remote from the sump.

3. . A method of monitoring one or more sumps according to claim 1 or claim 2, comprising monitoring, using at least one flow meter, of at least one of:
the flow into and the flow out of the sump
outputting flow meter data and processing at least one of the flow into and flow out of the sump, using the processing means, to predict whether the sump will overflow within the predetermined future period.

4. . A method of monitoring one or more sumps (4) according to any preceding claim, in which the monitoring of at least one of the liquid level (26, 28) and the pump condition and the or each flow meter is performed substantially continuously.

5. . A method of monitoring one or more sumps according to claim 1, claim 2 or claim 3, in which the monitoring of at least one of the liquid level (26, 28) and the pump condition and the or each flow meter is performed from time to time wherein in particular at least one of the liquid level (26, 28) and the pump condition and the or each flow meter may be monitored every second.

6. . A method of monitoring one or more sumps according to any preceding claim, in which data from at least one of the liquid level monitoring means and the or each flow meter is output to a processing means (20) at a location remote to the sump (4) or is output to a local processing means.

7. . A method of monitoring one or more sumps according to any preceding claim, in which at least one of the pump condition data and the liquid level data and the flow meter data is used to determine a pump condition wherein in particular the pump condition may be indicated at a location remote to the sump.

8. . A method of monitoring one or more sumps according to any preceding claim, which calculates a rate of change of liquid level in order to predict whether the sump will overflow within a predetermined future period in which at least one of the liquid level monitoring means and the processing means may be provided with a maximum rate of flow into the sump and a signal is transmitted from at least one of the liquid level motoring means and the processing means if the rate of change of liquid level in the sump is greater than predicted in combination with the rate of flow of liquid into the sump.

9. . A method of monitoring one or more sumps according to any preceding claim, in which at least one of the following occurs:
a) an alarm signal is generated or transmitted or both if an overflow is predicted within the predetermined future period;
b) a signal is transmitted from at least one of the liquid level monitoring means and the processing means if the liquid level increases in the absence of flow of liquid into the sump;
c) the monitored operating condition is selected from the following: temperature of the pump, current drawn by the pump;
d) a signal is transmitted to a location remote to the or each sump if the pump monitoring means detects an increase in the current draw of any pump and the liquid level monitoring means detects an increase in the corresponding liquid level;
e) a signal is transmitted to a location remote to the sump if a thermal sensor provided in thermal connection with any pump monitoring means detects an increase in the temperature of the corresponding pump and the corresponding liquid level monitoring means detects an increase in the liquid level in the corresponding sump; and
f) a processing means at a location remote to the sump ranks those sumps in which there is a predicted overflow within a predetermined period of time in an order in which those sumps are predicted to overflow.

10. . A method of monitoring one or more sumps according to any preceding claim, in which at least one pump (14) is provided with a restart mechanism.

11. . A method of monitoring one or more sumps according to claim 10, in which the restart mechanism is automatically initiated at a certain liquid level.

12. . A method of monitoring one or more sumps according to claim 10 or claim 11, in which the pump monitoring means generates a pump failure signal if the restart mechanism fails to restart the pump (14) on a predetermined number of consecutive occasions.

13. . A method of monitoring one or more sumps according to any preceding claim, in which a flow switch is provided on a pump operable to measure a flow rate of liquid through the pump (14) and a signal is transmitted to a location remote to the corresponding sump if the flow rate is lower than a predetermined flow rate and wherein the efficiency of the pump (14) may be measured such that if the measured volume of liquid pumped in a predetermined time does not substantially correspond to a predetermined pump characteristic then this is indicated at a location remote to the sump.

14. . An apparatus, for monitoring a condition of one or more sumps from a remote location, comprising
at least one pump (14) located in the or each sump (4);
a pump monitor which monitors at least one operating condition of the or each pump (14) and to output pump condition data;
a sump (4) liquid level monitor which monitors a liquid level in the sump (4) and to output liquid level data **characterised in that** the apparatus also comprises;
processing circuitry arranged to receive pump condition data and liquid level data and output sump status indication data;
wherein the operating condition of the at least one pump is selected from the group comprising
a temperature of the pump,
a current drawn by the pump,
a flow rate of liquid through the pump,
a restart condition of the pump, and
wherein the processing circuitry (20) is arranged such that processing of the liquid level data and the pump condition data generates a prediction as to whether the sump will overflow within a future period and wherein the sump status indication data comprises the prediction as to whether the sump will overflow.

15. . A machine readable medium containing instructions which when read by the machine cause that machine to monitor one or more sumps, by:
pumping, using at least one pump (4), liquid from the or each sump (14);
monitoring a liquid level in the or each sump (14) using a level monitor and outputting liquid level data **characterised in that** the method also comprises;
monitoring at least one operating condition of the or each pump (14) and outputting pump condition data wherein the operating condition is selected from the group comprising temperature of the pump, current drawn by the pump, restart condition of the pump, flow rate through the pump line, efficiency of the pump and
processing the liquid level and pump condition data, using processing circuitry, to predict whether the sump will overflow within a predetermined future period and outputting the prediction.

## Patentansprüche

1. Ein Verfahren zur Überwachung von einer oder mehreren Sumpfwannen, wobei das Verfahren aus Folgenden besteht:
unter Verwendung von mindestens einer Pumpe (14) Pumpen von Flüssigkeit von der oder jeder Sumpfwanne (4);
Überwachen eines Flüssigkeitspegels (26, 28) in der oder jeder Sumpfwanne (4) unter Verwendung einer Füllstandüberwachung und Ausgabe von Flüssigkeitspegeldaten, **dadurch gekennzeichnet, dass** zum Verfahren zudem Folgendes gehört:
Überwachung von zumindest einem Betriebszustand der oder jeder Pumpe (14) und Ausgabe von Pumpenzustandsdaten, wobei der Betriebszustand aus der Gruppe bestehend aus Temperatur der Pumpe, Stromaufnahme der Pumpe, Neustartzustand der Pumpe, Durchflussrate durch die Pumpenleitung, Leistung der Pumpe ausgewählt wird, und
Bearbeiten von Flüssigkeitspegel- (26, 28) und Pumpenzustandsdaten unter Verwendung einer Bearbeitungseinrichtung (20), um vorauszusagen, ob die Sumpfwanne innerhalb eines vorbestimmten zukünftigen Zeitraums überlaufen wird, sowie Ausgabe der Voraussage.

2. Ein Verfahren zur Überwachung von einer oder mehreren Sumpfwannen entsprechend Anspruch 1, wobei die Voraussage, ob die Sumpfwanne überläuft, entweder an einem Standort fern der Sumpfwanne stattfindet oder zu einem Standort fern der Sumpfwanne übertragen wird.

3. Ein Verfahren zur Überwachung von einer oder mehreren Sumpfwannen entsprechend Anspruch 1 oder Anspruch 2, bestehend aus Überwachung von zumindest einem der folgenden unter Verwendung von mindestens einem Durchflussmesser:
Einfluss in und Ausfluss aus der Sumpfwanne,
Ausgabe der Durchflussmesserdaten und Bearbeiten von zumindest Einfluss in oder Ausfluss aus der Sumpfwanne unter Verwendung der Bearbeitungseinrichtung, um vorauszusagen, ob die Sumpfwanne innerhalb des vorbestimmten zukünftigen Zeitraums überlaufen wird.

4. Ein Verfahren zur Überwachung von einer oder mehreren Sumpfwannen (4) entsprechend einem der vorangehenden Ansprüche, wobei die Überwachung von zumindest einem der Folgenden, nämlich Flüssigkeitspegel (26, 28) und Pumpenzustand sowie des oder jedes Durchflussmessers im Wesentlichen fortlaufend erfolgt.

5. Ein Verfahren zur Überwachung von einer oder mehreren Sumpfwannen entsprechend Anspruch 1 oder Anspruch 2 oder Anspruch 3, wobei die Überwachung von zumindest einem der Folgenden, nämlich Flüssigkeitspegel (26, 28) und Pumpenzustand sowie des oder jedes Durchflussmessers mitunter erfolgt, wobei insbesondere zumindest eines der Folgenden, nämlich Flüssigkeitspegel (26, 28) und Pumpenzustand sowie der oder jeder Durchflussmessers im Wesentlichen jede Sekunde überwacht werden kann.

6. Ein Verfahren zur Überwachung von einer oder mehreren Sumpfwannen entsprechend einem der vorangehenden Ansprüche, bei dem Daten von zumindest einem der Folgenden, nämlich Füllstandüberwachung und dem oder jedem Durchflussmesser an eine Bearbeitungseinrichtung (20) an einem Standort fern von der Sumpfwanne (4) oder an eine örtliche Bearbeitungseinrichtung ausgeben wird.

7. Ein Verfahren zur Überwachung von einer oder mehreren Sumpfwannen entsprechend einem der vorangehenden Ansprüche, bei dem zumindest eines der Folgenden, nämlich Pumpenzustandsdaten und Flüssigkeitspegeldaten und der Durchflussmesser zur Bestimmung eines Pumpenzustands verwendet wird, wobei insbesondere der Pumpenzustand an einem Standort fern der Sumpfwanne angezeigt werden kann.

8. Ein Verfahren zur Überwachung von einer oder mehreren Sumpfwannen entsprechend einem der vorangehenden Ansprüche, das eine Änderungsrate eines Flüssigkeitspegels errechnet, um vorauszusagen, ob die Sumpfwanne innerhalb eines vorbestimmten zukünftigen Zeitraums überlaufen wird, bei dem zumindest die Füllstandüberwachung oder die Bearbeitungseinrichtung mit einer maximalen Einlaufrate in die Sumpfwanne ausgestattet ist, und von zumindest der Füllstandüberwachung oder der Bearbeitungseinrichtung ein Signal übertragen wird, wenn die Änderungsrate des Flüssigkeitspegels in Sumpfwanne in Kombination mit der Einlaufrate der Flüssigkeit in die Sumpfwanne größer als vorausgesagt ist.

9. Ein Verfahren zur Überwachung von einer oder mehreren Sumpfwannen entsprechend einem der vorangehenden Ansprüche, bei dem zumindest eines der Folgenden eintritt:
a) ein Alarmsignal wird erzeugt oder übertragen oder beides, wenn innerhalb eines vorbestimmten zukünftigen Zeitraums ein Überlaufen vorausgesagt wird;
b) ein Signals wird zumindest von der Füllstandüberwachung oder der Bearbeitungseinrichtung übertragen, wenn der Flüssigkeitspegel in Anwesenheit eines Einlaufs von Flüssigkeit in die Sumpfwanne zunimmt;
c) der überwachte Betriebszustand wird aus einem der Folgenden ausgewählt: Temperatur der Pumpe, Stromaufnahme der Pumpe;
d) ein Signal wird an einen Standort fern de oder jeder Sumpfwanne übertagen, wenn die Pumpenüberwachung einen Anstieg in der Stromaufnahme einer Pumpe feststellt und die Füllstandüberwachung einen Anstieg im entsprechenden Flüssigkeitspegel feststellt;
e) ein Signal wird an eine Standort fern von der Sumpfwanne übertragen, wenn ein Wärmefühler, der in der thermischen Verbindung mit einer Pumpenüberwachung vorgesehen ist, einen Temperaturanstieg der entsprechenden Pumpe feststellt und die entsprechende Füllstandüberwachung einen Anstieg im Flüssigkeitspegel in der entsprechenden Sumpfwanne feststellt; und
f) eine Bearbeitungseinrichtung an einem Standort fern der Sumpfwanne die Sumpfwannen, bei denen innerhalb eines vorbestimmten zukünftigen Zeitraums ein Überlaufen vorausgesagt wird, in einer Reihenfolge aufreiht, in welcher ein Überlaufen bei diesen Sumpfwanne vorausgesagt wird.

10. Ein Verfahren zur Überwachung von einer oder mehreren Sumpfwannen entsprechend einem der vorangehenden Ansprüche, bei dem zumindest eine Pumpe (14) mit einem Neustartmechanismus ausgerüstet ist.

11. Ein Verfahren zur Überwachung von einer oder mehreren Sumpfwannen entsprechend Anspruch 10, bei dem der Neustartmechanismus bei einem bestimmten Flüssigkeitspegel automatisch ausgelöst wird.

12. Ein Verfahren zur Überwachung von einer oder mehreren Sumpfwannen entsprechend Anspruch 10 oder Anspruch 11, bei dem die Pumpenüberwachung ein Pumpenversagenssignal erzeugt, wenn der Neustartmechanismus die Pumpe (14) bei einer vorbestimmten Zahl aufeinanderfolgender Anlässe nicht neustartet.

13. Ein Verfahren zur Überwachung von einer oder mehreren Sumpfwannen entsprechend einem der vorangehenden Ansprüche, bei dem ein Strömungswächter an einer Pumpe vorgesehen ist, der eingesetzt werden kann, um eine Durchflussrate einer Flüssigkeit durch die Pumpe (14) zu messen, und ein Signal an einen Standort fern der entsprechenden Sumpfwanne übertragen wird, wenn die Fließrate unter einer vorbestimmten Fließrate liegt, und wobei die Leistung der Pumpe (14) gemessen werden kann, so dass, wenn das gemessene Volumen der während eines vorbestimmten Zeitraums gepumpten Flüssigkeit im Wesentlichen nicht einem vorbestimmten Pumpenmerkmal entspricht, dies dann an einem Standort fern der Sumpfwanne angezeigt wird.

14. Eine Vorrichtung zur Überwachung eines Zustands von einer oder mehreren Sumpfwannen von einem fernen Standort, bestehend aus:
mindestens einer Pumpe (14) in der oder jeder Sumpfwanne (4);
einer Pumpenüberwachung, die zumindest einen Betriebszustand jeder Pumpe (14) überwacht und Pumpenzustandsdaten ausgibt;
einer Füllstandüberwachung der Sumpfwanne (4), die einen Flüssigkeitspegel in der Sumpfwanne (4) überwacht und Flüssigkeitspegeldaten ausgibt, **dadurch gekennzeichnet, dass** zur Verrichtung zudem Folgendes gehört:
eine Bearbeitungseinrichtung , die so angeordnet ist, dass sie Pumpenzustandsdaten und Flüssigkeitspegeldaten und Ausgabestatusanzeigendaten der Sumpfwanne empfängt;
wobei der Betriebszustand der mindestens einen Pumpe aus der Gruppe bestehend aus Folgenden ausgewählt wird:
einer Temperatur der Pumpe,
einer Stromaufnahme der Pumpe,
einer Durchflussrate der Flüssigkeit durch die Pumpe,
einem Neustartzustand der Pumpe, und
wobei die Bearbeitungseinrichtung (20) so angeordnet ist, dass das Bearbeiten von Flüssigkeitspegel (26, 28) und Pumpenzustandsdaten ein Voraussage erzeugt, ob die Sumpfwanne innerhalb eines zukünftigen Zeitraums überlaufen wird, und wobei die Zustandsanzeigedaten der Sumpfwanne eine Voraussage umfassen, ob die Sumpfwanne innerhalb eines vorbestimmten zukünftigen Zeitraums überlaufen wird.

15. Ein maschinenlesbares Medium mit Anweisungen, die beim Lesen durch die Maschine veranlassen, dass die Maschine eine oder mehrere Sumpfwannen durch Folgendes überwacht:
unter Verwendung von mindesten einer Pumpe (4) Pumpen von Flüssigkeit von der oder jeder Sumpfwanne (14);
Überwachen eines Flüssigkeitspegels in der oder jeder Sumpfwanne (14) unter Verwendung einer Füllstandüberwachung und Ausgabe von Flüssigkeitspegeldaten, **dadurch gekennzeichnet, dass** zum Verfahren zudem Folgendes gehört:
Überwachung von zumindest einem Betriebszustand der oder jeder Pumpe (14) und Ausgabe von Pumpenzustandsdaten, wobei der Betriebszustand aus der Gruppe bestehend aus Temperatur der Pumpe, Stromaufnahme der Pumpe, Neustartzustand der Pumpe, Durchflussrate durch die Pumpenleitung, Leistung der Pumpe ausgewählt wird, und
Bearbeiten von Flüssigkeitspegel- und Pumpenzustandsdaten unter Verwendung einer Bearbeitungseinrichtung, um vorauszusagen, ob die Sumpfwanne innerhalb eines vorbestimmten zukünftigen Zeitraums überlaufen wird, sowie Ausgabe der Voraussage.

## Revendications

1. Un procédé de surveillance d'un ou plusieurs bassins collecteurs, le procédé comprenant :
le pompage, au moyen d'au moins une pompe (14), de liquide provenant du ou chaque bassin collecteur (4),
la surveillance d'un niveau de liquide (26, 28) dans le ou chaque bassin collecteur (4) au moyen d'un appareil de surveillance de niveau et la production de données de niveau de liquide, **caractérisé en ce que** le procédé comprend également
la surveillance d'au moins une condition de fonctionnement de la ou chaque pompe (14) et la production de données de condition de pompe où la condition de fonctionnement est sélectionnée dans le groupe comprenant température de la pompe, courant aspiré par la pompe, condition de redémarrage de la pompe, vitesse d'écoulement au travers du conduit de pompe, efficacité de la pompe, et
le traitement du niveau de liquide (26, 28) et des données de condition de pompe, au moyen d'un circuit de traitement (20), de façon à prédire si le bassin collecteur débordera à l'intérieur d'une période future prédéterminée et la production de la prédiction.

2. Un procédé de surveillance d'un ou plusieurs bassins collecteurs selon la Revendication 1, dans lequel la prédiction selon laquelle le bassin collecteur débordera est exécutée soit au niveau d'un emplacement distant du bassin collecteur ou est transmise à un emplacement éloigné du bassin collecteur.

3. Un procédé de surveillance d'un ou plusieurs bassins collecteurs selon la Revendication 1 ou 2, comprenant la surveillance, au moyen d'au moins un débitmètre, d'au moins un élément parmi :
l'écoulement entrant dans et l'écoulement sortant du bassin collecteur,
la production de données de débitmètre et le traitement d'au moins un élément parmi l'écoulement entrant dans et l'écoulement sortant du bassin collecteur, au moyen du moyen de traitement, de façon à prédire si le bassin collecteur débordera à l'intérieur de la période future prédéterminée.

4. Un procédé de surveillance d'un ou plusieurs bassins collecteurs (4) selon l'une quelconque des Revendications précédentes, dans lequel la surveillance d'au moins un élément parmi le niveau de liquide (26, 28) et la condition de la pompe et le ou chaque débitmètre est exécutée sensiblement en continu.

5. Un procédé de surveillance d'un ou plusieurs bassins collecteurs selon la Revendication 1, 2 ou 3, dans lequel la surveillance d'au moins un élément parmi le niveau de liquide (26, 28) et la condition de la pompe et le ou chaque débitmètre est exécutée à intervalles réguliers, où en particulier au moins un élément parmi le niveau de liquide (26, 28) et la condition de la pompe et le ou chaque débitmètre peut être surveillé chaque seconde.

6. Un procédé de surveillance d'un ou plusieurs bassins collecteurs selon l'une quelconque des Revendications précédentes, dans lequel des données provenant d'au moins un élément parmi le moyen de surveillance du niveau de liquide et le ou chaque débitmètre sont envoyées à un moyen de traitement (20) au niveau d'un emplacement éloigné du bassin collecteur (4) ou sont envoyées à un moyen de traitement local.

7. Un procédé de surveillance d'un ou plusieurs bassins collecteurs selon l'une quelconque des Revendications précédentes, dans lequel au moins des données parmi les données de condition de pompe et les données de niveau de liquide et les données de débitmètre sont utilisées de façon à déterminer une condition de pompe, où en particulier la condition de pompe peut être indiquée au niveau d'un emplacement éloigné du bassin collecteur.

8. Un procédé de surveillance d'un ou plusieurs bassins collecteurs selon l'une quelconque des Revendications précédentes, qui calcule une vitesse de changement d'un niveau de liquide afin de prédire si le bassin collecteur débordera à l'intérieur d'une période future prédéterminée, dans lequel au moins un moyen parmi le moyen de surveillance du niveau de liquide et le moyen de traitement peut être doté d'une vitesse d'écoulement maximale dans le bassin collecteur et un signal est transmis à partir d'au moins un moyen parmi le moyen de surveillance de niveau de liquide et le moyen de traitement si la vitesse de changement d'un niveau de liquide dans le bassin collecteur est plus grande que prévue en combinaison avec la vitesse d'écoulement de liquide dans le bassin collecteur.

9. Un procédé de surveillance d'un ou plusieurs bassins collecteurs selon l'une quelconque des Revendications précédentes, dans lequel au moins un événement parmi les suivants se produit :
a) un signal d'alarme est généré ou transmis ou les deux si un débordement est prédit à l'intérieur de la période future prédéterminée,
b) un signal est transmis à partir d'au moins un moyen parmi le moyen de surveillance du niveau de liquide et le moyen de traitement si le niveau de liquide augmente en l'absence d'écoulement de liquide dans le bassin collecteur,
c) la condition de fonctionnement surveillée est sélectionnée parmi les suivantes : température de la pompe, courant aspiré par la pompe,
d) un signal est transmis à un emplacement éloigné du ou chaque bassin collecteur si le moyen de surveillance de la pompe détecte une augmentation dans le courant aspiré par une pompe quelconque et le moyen de surveillance du niveau de liquide détecte une augmentation dans le niveau de liquide correspondant,
e) un signal est transmis à un emplacement éloigné du bassin collecteur si un capteur thermique installé en connexion thermique avec tout moyen de surveillance de pompe détecte une augmentation dans la température de la pompe correspondante et que le moyen de surveillance du niveau de liquide correspondant détecte une augmentation dans le niveau de liquide dans le bassin collecteur correspondant, et
f) un moyen de traitement situé au niveau d'un emplacement éloigné du bassin collecteur classe ces bassins collecteurs pour lesquels un débordement est prédit à l'intérieur d'une période de temps prédéterminée dans un ordre dans lequel il prédit que ces bassins collecteurs déborderont.

10. Un procédé de surveillance d'un ou plusieurs bassins collecteurs selon l'une quelconque des Revendications précédentes, dans lequel au moins une pompe (14) est équipée d'un mécanisme de redémarrage.

11. Un procédé de surveillance d'un ou plusieurs bassins collecteurs selon la Revendication 10, dans lequel le mécanisme de redémarrage est mis en marche automatiquement à partir d'un certain niveau de liquide.

12. Un procédé de surveillance d'un ou plusieurs bassins collecteurs selon la Revendication 10 ou 11, dans lequel le moyen de surveillance de la pompe génère un signal de panne de pompe si le mécanisme de redémarrage échoue à redémarrer la pompe (14) un nombre prédéterminé de fois consécutives.

13. Un procédé de surveillance d'un ou plusieurs bassins collecteurs selon l'une quelconque des Revendications précédentes, dans lequel un commutateur d'écoulement est installé sur une pompe conçu de façon à mesurer une vitesse d'écoulement de liquide au travers de la pompe (14) et un signal est transmis à un emplacement éloigné du bassin collecteur correspondant si la vitesse d'écoulement est inférieure à une vitesse d'écoulement prédéterminée et où l'efficacité de la pompe (14) peut être mesurée de sorte que, si le volume de liquide mesuré pompé en un temps prédéterminée ne correspond pas sensiblement à une caractéristique de pompe prédéterminée, alors cette information est signalée à un emplacement éloigné du bassin collecteur.

14. Un appareil destiné à la surveillance d'une condition d'un ou plusieurs bassins collecteurs à partir d'un emplacement distant, comprenant
au moins une pompe (14) installée dans le ou chaque bassin collecteur (4),
un appareil de surveillance de pompe qui surveille au moins une condition de fonctionnement de la ou chaque pompe (14) et qui produit des données de condition de pompe,
un appareil de surveillance de niveau de liquide de bassin collecteur (4) qui surveille un niveau de liquide dans le bassin collecteur (4) et qui produit des données de niveau de liquide, **caractérisé en ce que** l'appareil comprend également :
un circuit de traitement agencé de façon à recevoir des données de condition de pompe et des données de niveau de liquide et à produire des données d'indication d'état de bassin collecteur,
où la condition de fonctionnement de la au moins une pompe est sélectionnée dans le groupe comprenant
une température de la pompe,
un courant aspiré par la pompe,
une vitesse d'écoulement de liquide au travers de la pompe,
une condition de redémarrage de la pompe, et
où le circuit de traitement (20) est agencé de sorte que le traitement des données de niveau de liquide et des données de condition de pompe génère une prédiction selon laquelle le bassin collecteur débordera à l'intérieur d'une période future et où les données d'indication d'état de bassin collecteur comprennent la prédiction selon laquelle le bassin collecteur débordera.

15. Un support lisible par ordinateur contenant des instructions qui, lorsqu'elles sont lues par l'ordinateur, amènent l'ordinateur à surveiller un ou plusieurs bassins collecteurs, par :
le pompage, au moyen d'au moins une pompe (4), de liquide du ou chaque bassin collecteur (14),
la surveillance d'un niveau de liquide dans le ou chaque bassin collecteur (14) au moyen d'un appareil de surveillance de niveau et la production de données de niveau de liquide, **caractérisée en ce que** le procédé comprend également :
la surveillance d'au moins une condition de fonctionnement de la ou chaque pompe (14) et la production de données de condition de pompe où la condition de fonctionnement est sélectionnée dans le groupe comprenant température de la pompe, courant aspiré par la pompe, condition de redémarrage de la pompe, vitesse d'écoulement au travers du conduit de pompe, efficacité de la pompe et
le traitement du niveau de liquide et des données de condition de pompe, au moyen d'un circuit de traitement, de façon à prédire si le bassin collecteur débordera à l'intérieur d'une période future prédéterminée, et la production de la prédiction.
